# EUROPEAN PATENT APPLICATION

(11) **EP 1 429 574 A1**
(43) Date of publication of application: **16.06.2004**
(21) Application number: 02080169.2
(22) Date of filing: 10.12.2002
(51) Int. Cl.: H04Q 7/38

(54) **Method and system for notification**

(71) Applicant: Koninklijke KPN N.V., 9726 AE Groningen (NL); Sping B.V., 2264 XZ Leidschendam (NL)
(72) Inventor: Pals, Herman, 2497 BC The Hague (NL); Eggenkamp, Marcus Everarda Wilhelmus, 2332 XB Leiden (NL); Snip, Jan Gerard, 2381 TC Zoeterwoude-Dorp (NL); Verdonk, Jeroen, 3062 KT Rotterdam (NL)
(74) Representative: Wuyts, Koenraad Maria

(57) **Abstract**

System comprising a notification server (6) for notifying unsuccessful calls from first terminals (1) via a telecommunication network (2) to a second terminal (4) temporarily not accessible. The notification server is fit to register an identifier of first terminal (1) and to transmit the identifier to the second terminal (4) after the second terminal has become accessible. Monitoring means (5) monitor the accessability of the second terminal. The notification server (6) registers e.g. the calling line identifier of the first terminal (1) and calls, after the second terminal (4) has become accessible, the second terminal (4), transmitting an artificial calling line identifier having the value of the calling line identifier of the first terminal, registered by the notification server. The call to the second terminal (4) is aborted as soon as the identifier has been transmitted to the second terminal. The second terminal, after having become accessible, thus receives and lists the identifier of the first terminal, enabling the second terminal's user to call back the first terminal in the same way as "unanswered calls".

## Description

### Field of the Invention

The invention refers to a method and a system for notifying calls from first terminals to temporarily unaccessible second terminals.

### Background of the Invention

When a first terminal sets up, via a telecommunication network, a call to a second terminal connected to the network, the second terminal's user may not answer ("pick up") to the call for some reason. In that case the unanswered call may be notified to the second terminal's user by registering, by the second terminal itself, the identity of the first terminal trying to call the second terminal. The identity to be registered in an "unanswered calls" list may comprise the relevant first terminal's "Calling Line Identifier" (CLI) or another relevant terminal or network node identifier or identifier, fit to setup -with minimal user input- a "reply-call" from the second terminal to the relevant first terminal, written in the "unanswered calls" list.

However, when the second terminal is unreachable at the moment of the call, e.g. while it is occupied by a connection with another (first) terminal or when it is disconnected from the network, such an unsuccessful (failed) call -viz. the relevant terminal or node address or identifier- cannot be listed by the relevant second terminal and displayed to its user, while the second terminal, at the moment of the unsuccessful call, is unable to receive and process the relevant first terminal's identifier, while, after all, it cannot be accessed by the first terminal.

Hereinafter, where applicable, the terms "Calling Line Identifier" and CLI, which are often used in the domain of (fixed and mobile) telephony, are deemed to have the more general meaning of (calling) terminal or server address or identifier, or the relevant terminal's or server's (network) node address or node identifier.

### Summary of the Invention

An important aim of the present invention is to provide that unsuccessful calls to a (second) terminal are notified too in the cases in which according to the state-of-the-art notification is impossible.

The invention comprises a method, a system adapted to perform that method, a notification server forming an important part of the system, and software for controlling the notification server, all complying with the aim of the present invention.

The method according to the present invention preferrably comprises next steps:
- an identifier of an unsuccessfully calling first terminal is derived from the telecommunication network and registered;
- it is monitored when the second terminal becomes accessible;
- when the second terminal has become accessible the registered identifier of the first terminal is transmitted to the second terminal.

The second terminal, after having become accessible, may receive and list the transmitted identifier of the relevant first terminal, enabling e.g. a second terminal's user to call back the relevant first terminal or terminals in a convenient way, making use of the received terminal identifiers, in the same way as the user may call back unanswered calls.

Preferrably, the identifier of the unsuccessfully calling first terminal is constituted or determined by its calling line identifier (CLI). The second terminal, after having become accessible, may be called using an artificial CLI, having the value of the CLI of the relevant unsuccessfully calling first terminal. In this way the CLI of the relevant first terminal is transmitted to the second terminal using a standard calling (signalling) protocol with CLI forwarding.

Preferrably, the call, including the relevant artificial CLI, is aborted as soon as the artificial CLI has been received by the second terminal. In that way the artificial CLI may be transmitted to the second terminal while avoiding undesired user intervention, viz. call pick up. The only goal of sending an artificial CLI equal to the first terminal's CLI, after all, is to send a replica of the first terminal's CLI, whereupon the second terminal is enabled to list that call into its "unanswered calls" list, thus enabling the second terminal's user to reply to the first terminal's unsuccessfull (failed) call as were that call an unanswered call.

Instead of using the first terminal's CLI, use could be made of another terminal or network node identifier or address, e.g. the terminal's Universal Unique Identifier (UUID), (fixed) IP address, International Mobile User Number (IMUN), etc. In those cases, the second terminal, after having become accessible, may be called using an (artificial) identifier (UUID, IP address, IMUN), having the value of the identifier of the relevant unsuccessfully calling first terminal, thus transmitting the relevant first terminal's identifier to the second terminal using a standard protocol.

A system for executing the above method may comprise a notification server for notifying unsuccessful calls from first terminals via a telecommunication network to a second terminal which temporarily may be not accessible by said first terminals and/or the telecommunication network, the notification server being fit to register an identifier of such an unsuccessfully calling first terminal and to transmit the identifier to the second terminal after the second terminal has become accessible.

The system preferrably comprises monitoring means, co-operating with the notification server, for monitoring the accessability of the second terminal, the notification server, after the second terminal has become accessible, transmitting the registered identifier to the second terminal.

Preferrably, the notification server is fit to register a calling line identifier of the relevant unsuccessfully calling first terminal and to call, after the second terminal has become accessible, the second terminal, transmitting an artificial calling line identifier having th e value of the calling line identifier of the relevant unsuccessfully calling first terminal, registered by the notification server. Transmitting said artificial calling line identifier instead of a "standard" calling line identifier enables the second terminal's user to "reply" to that artificial calling line identifier and thus setup a call to the relevant first terminal in a convenient, user-friendly way, without any modification of the first terminal's hardware or software, viz. using the terminal's "reply to unanswered calls" capability.

### Figures

Figure 1 shows a first embodiment of the invention, comprising a notification server within the domain of the telecommunication network.
Figure 2 shows a second embodiment of the invention, comprising a notification server located outside the telecommunication network but linked to it from another network.

### Detailed Description of the Drawings

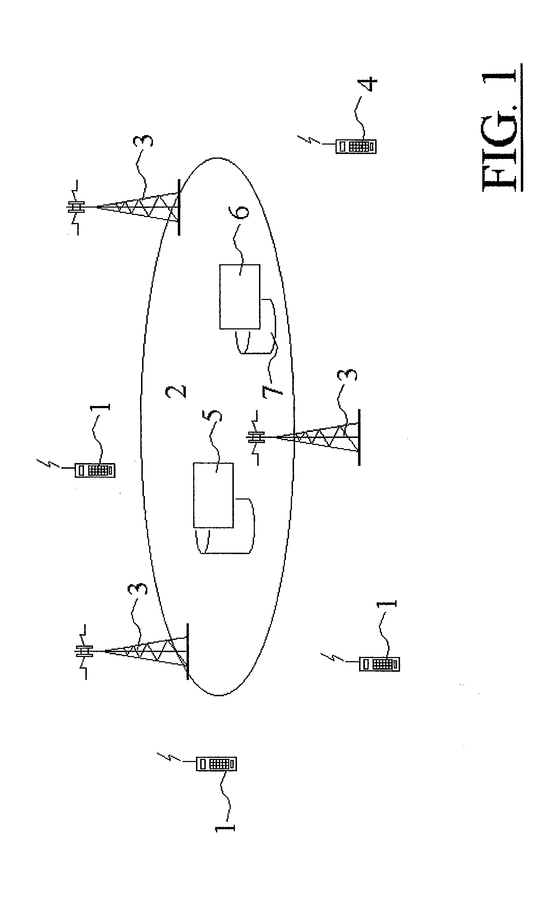

Figure 1 shows first terminals 1, a telecommunication network 2 (including base stations 3) and a second terminal 4 which temporarily may be not accessible by the first terminals 1 and/or the telecommunication network 2. The network 2 comprises a notification server 6 which is fit for notifying unsuccessful calls to the second terminal 4.

The notification server 6 is linked to a telecommunication network signalling and/or control system, including a monitoring function, represented by a 'Terminal Registration System' (TRS) 5 (e.g may incorporate a Home Location Register (TRS), 'Visiting Location Registers' (VLRs), Mobile Switching Centers (MSCs) etc.) The TRS 5 enables the notification server 6 to know (monitor, detect) when the second terminal 4 is accessible or is unaccessible to the telecommunication network and the connected (first) terminals 1. The notification server 6 comprises a register 7 for registering the identifier, e.g. the CLI of each first terminal 1 that unsuccessfully -due to failing access- calls second terminal 4.

The notification server 6 -linked to the TRS 5- is enabled to transmit the identifier of each unsuccessfully calling first terminal from register 7 to the second terminal 4 when, preferrably as soon as, -detected via the TRS 5- the second terminal has become accessible.

The notification server 6, after the second terminal 4 has become accessible, calls, e.g. apart for each registered unsuccessfully calling first terminal 1, the second terminal 4 while transmitting -instead of the notification server's own CLI- an artificial CLI, to which the value of the calling line identifier of the relevant unsuccessfully calling first terminal has been assigned by the notification server 6. To this end, the notification server 6 comprises control software which replaces the originating CLI (viz. the server's calling node CLI) by an artificial CLI, which is read from the server's register 7. By doing so, the second terminal 4, called by the notification server 6, will not detect and list the notification server's CLI but, instead, the CLI read from the register 7, which is equal to the CLI of the relevant first terminal 1 which failed to set-up a call to the second terminal 4 before.

Preferrably, the notification server 6 aborts the call to the second terminal 4 as soon as the artificial CLI has been transmitted to the second terminal, preventing incurring call setup charges and undesired call pick-up by the second terminal's user, which item will be discussed below more in detail.

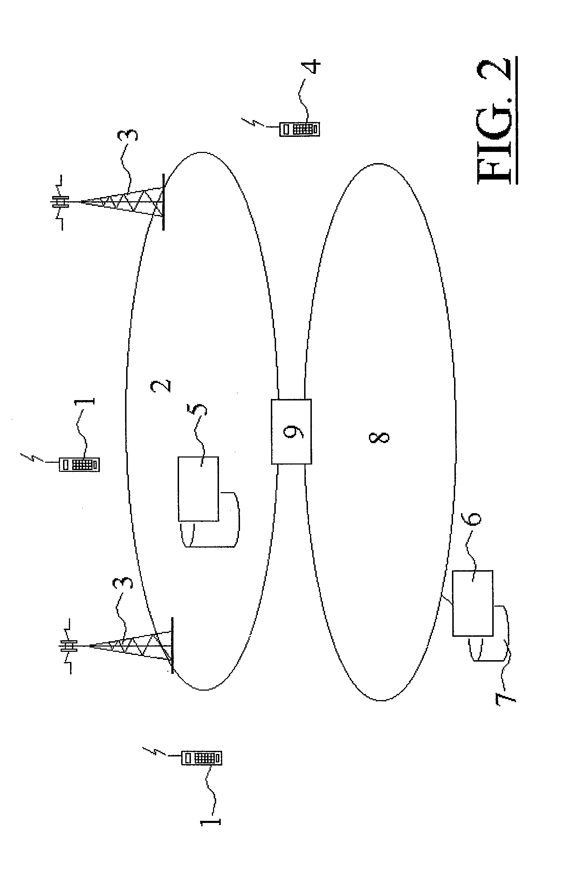

Figure 2 shows an embodiment wherein the notification server 6 is connected to another network 8, e.g. the internet. The notification server 6 is linked now to the TRS 5 via the internet 8 and a internet/telephony network gateway 9, e.g. as described in patent application EP2079379, filed by the applicant before, enabling internet based servers to interact with telephony network elements like the TRS 5.

Below the operation of the system shown in figure 2 will be outlined more in detail.

At a certain moment, the user of one of the terminals 1 desires to setup a call to terminal 4 by keying in the telephone number of terminal 4 e.g. 0653724444. The call, however, may fail while terminal 4 is e.g. disconnected from the network by the terminal's user, not reachable by the network 2 due to bad field strength, or busy by a connection with another terminal 1. In all those cases the telephone number (CLI), e.g. 0619171111 of the originating terminal 1 cannot be listed locally by the unsuccessfully called terminal 4. If a call is setup to terminal 4, this is controlled by the TRS 5. The TRS 5 is aware of the status of terminal 4. So in this case, the TRS 5 doesnot make a connection to terminal 4, while terminal 4 cannot be reached at that moment. TRS 5, however, is able to read and register the telephone number of the "target" terminal 4 (0653724444) and the telephone number or CLI (0619171111) of originating (calling) terminal 1 and keeps track of the accessability status of terminal 4.

The notification server 6 is linked with the TRS 5, in this figure 2 via the internet 8 and the internet/telephony network gateway 9. The notification server 6 is able to derive, from the TRS 5, the CLI (0619171111) of calling terminal 1, the CLI (0653724444) of target terminal 4 and the accessability status of the unsuccessfully called terminal 4.

As soon as the terminal 4 becomes accessible -because the connection with the other terminal 1 ends, or because the user of terminal 4 reconnects to the network 2 again- this is detected by the TRS 5. At that moment -or some time after that- this accessability status change of terminal 4 is forwarded to the notification server 6, accompanied with the telephone number or CLI of originating terminal 1 (0619171111) and the telephone number or CLI of destination terminal 4 (0653724444). Based on these CLI values the notification server 6 arranges -via the gateway 9- that, after the terminal 4has become accessable again, a new call is setup to the terminal 4.

Normally, the CLI of the notification server 6 itself would be transmitted to terminal 4, indicating the identifier (telephone number) of the originator of this new call, and the notification server's CLI would be listed at the called terminal 4. However, the notification server comprises a CLI conversion software modul which, before activating the new call to the terminal 4, replaces its own CLI (e.g. 0800567890) by the CLI value of the originally unsuccessful call originator, terminal 1. Consequently, after having been triggered by the TRS 5, the notification server 6 initiates a call to the telephone address 0653724444 of the newly accessible terminal 4, while transmitting, as artificial originating CLI value the value 0619171111 (terminal 1) instead of 0800567890 (notification server 6).

This action results in an activation of terminal 4 which is called by the notification server 6, receiving, from notification server 6, a call signal which includes the artificial originating CLI value 0619171111 of terminal 1.

If the user of terminal 4 would pick up the telephone immediately, he/she would be connected to the notification server 6, which would have no sense. The only aim for the notification server 6 making a call to terminal 4 is to send the CLI value 0619171111 (terminal 1) to terminal 4. To prevent that the user of terminal 4 picks up the call, the notification server 6 aborts the call to the terminal 4 as soon as the artificial CLI (0619171111) has been transmitted to terminal 4. So, notification server 6 calls terminal 4 using artificial CLI 0619171111 and subsequently aborts the call immediately. The effect is that terminal 4 receives a call with CLI 0619171111, which call -while it is aborted before the user responds- will be registered within terminal 4 in the terminal's "list of unanswered calls", which is a standard feature of many modern telephone terminals. In this way the notification server enables that the CLI 0619171111 of terminal 1 - which CLI normally would not be listed in terminal 4- now is picked up by the notification server 6 and -as soon as terminal 4 comes accessable- is forwarded to terminal 4 and written into its list of unanswered calls, thus enabling that the user of terminal 4 may call the caller(s) written in the terminal's list of unanswered calls in a trice.

## Claims

1. Method for notifying calls from first terminals (1), via a telecommunication network (2), to a second terminal (4) which is temporarily not accessible, comprising next steps:
- an identifier of such an unsuccessfully calling first terminal is derived from said telecommunication network;
- the derived identifier is registered;
- it is monitored when the second terminal becomes accessible;
- when the second terminal has become accessible the registered identifier is transmitted to the second terminal.

2. Method according to claim 1, wherein the second terminal, after having become accessible, receives and stores the transmitted identifier of the relevant first terminal.

3. Method according to claim 2, wherein the first terminal's identifier comprises its calling line identifier.

4. Method according to claim 3, wherein the second terminal, after having become accessible, is called using an artificial calling line identifier, having the value of the calling line identifier of the relevant unsuccessfully calling first terminal.

5. Method according to claim 1, wherein the call to the second terminal is aborted as soon as the identifier has been transmitted to the second terminal.

6. System comprising a notification server (6) for notifying unsuccessful calls from first terminals (1) via a telecommunication network (2) to a second terminal (4) which temporarily may be not accessible by said first terminals and/or the telecommunication network, the notification server being fit to register an identifier of such an unsuccessfully calling first terminal (1) and to transmit the identifier to the second terminal (4) after the second terminal has become accessible.

7. System according to claim 6, comprising monitoring means (5), co-operating with the notification server (6), for monitoring the accessability of the second terminal, the notification server (6), after the second terminal (4) has become accessible, transmitting the registered identifier to the second terminal.

8. System according to claim 7, the notification server (6) being fit to register a calling line identifier of the relevant unsuccessfully calling first terminal (1) and to call, after the second terminal (4) has become accessible, the second terminal (4), transmitting an artificial calling line identifier having the value of the calling line identifier of the relevant unsuccessfully calling first terminal, registered by the notification server.

9. System according to claim 6, the notification server (6) aborting the call to the second terminal (4) as soon as the identifier has been transmitted to the second terminal.

10. A notification server (6) for notifying unsuccessful calls from first terminals (1) via a telecommunication network (2) to a second terminal (4) which temporarily may be not accessible by said first terminals and/or the telecommunication network, the notification server comprising means fit to detect and register an identifier of such an unsuccessfully calling first terminal (1), means for co-operation with means (5) for monitoring the accessability of the second terminal, and means to transmit each registered identifier to the second terminal (4) after the second terminal has become accessible.

11. A notification server (6) according to claim 10, comprising means fit to detect and register a calling line identifier of the relevant unsuccessfully calling first terminal (1) and means fit to call, after the second terminal (4) has become accessible, the second terminal (4), and means for transmitting an artificial calling line identifier having the value of the calling line identifier of the relevant unsuccessfully calling first terminal, registered by the notification server.

12. A notification server (6) according to claim 10, comprising means for aborting the call to the second terminal (4) as soon as the identifier has been transmitted to the second terminal.

13. Software for controlling a notification server (6) according to claims 10 to 12, fit to cooperate with control software of said telecommunication network (2) and to detect and register the identifier of each unsuccessfully calling first terminal (1), and to transmit each registered identifier to the second terminal (4) after the second terminal has become accessible.

14. Software according to claim 13, fit to register the calling line identifier of the relevant unsuccessfully calling first terminal (1), fit to generate an artificial calling line identifier having the value of the calling line identifier of the relevant unsuccessfully calling first terminal, registered by the notification server, and fit to call, after the second terminal (4) has become accessible, the second terminal (4), transmitting said artificial calling line identifier.
